# EUROPÄISCHE PATENTSCHRIFT

(11) **EP 1 419 326 B1**
(45) Veröffentlichungstag und Bekanntmachung des Hinweises auf die Patenterteilung: **26.10.2005**
(21) Anmeldenummer: 02754513.6
(22) Anmeldetag: 09.08.2002
(51) Int. Cl.: F16H 61/02, B60K 31/00

(54) **AUSWAHLVORRICHTUNG SOWIE AUSWAHLVERFAHREN FÜR EINE FAHRSTUFE ODER EINE GANGSTUFE BEI EINEM GETRIEBE EINES KRAFTFAHRZEUGS**
SELECTOR DEVICE AND SELECTION PROCEDURE FOR A GEAR SPEED OR A GEAR RATIO IN A GEARBOX ON A MOTOR VEHICLE
DISPOSITIF ET PROCEDE DE SELECTION D'UNE PLAGE DE VITESSES OU D'UN RAPPORT DANS UNE BOITE DE VITESSES D'AUTOMOBILE

(30) Priorität: 21.08.2001 DE 10140869
(43) Veröffentlichungstag der Anmeldung: 19.05.2004
(73) Patentinhaber: SIEMENS AKTIENGESELLSCHAFT, 80333 München (DE)
(72) Erfinder: LOIBL, Josef, 93077 Bad Abbach (DE)
(86) Internationale Anmeldenummer: PCT/DE2002/002936
(87) Internationale Veröffentlichungsnummer: WO 2003/019046

(56) Entgegenhaltungen:
- EP-A- 0 702 209
- EP-A- 0 770 979
- WO-A-97/25555
- DE-A- 3 811 541
- DE-A- 10 024 034
- DE-A- 19 835 854
- PATENT ABSTRACTS OF JAPAN vol. 016, no. 030 (M-1203), 24. Januar 1992 (1992-01-24) -& JP 03 239856 A (NISSAN MOTOR CO LTD), 25. Oktober 1991 (1991-10-25)
- PATENT ABSTRACTS OF JAPAN vol. 2000, no. 21, 3. August 2001 (2001-08-03) -& JP 2001 090827 A (FUJI HEAVY IND LTD), 3. April 2001 (2001-04-03)

## Beschreibung

Auswahlvorrichtung sowie Auswahlverfahren für eine Fahrstufe oder eine Gangstufe bei einem Getriebe eines Kraftfahrzeugs

Die Erfindung betrifft eine Auswahlvorrichtung sowie ein Auswahlverfahren für eine Fahrstufe oder eine Gangstufe bei einem Getriebe eines Kraftfahrzeugs gemäß den Oberbegriffen der Ansprüche 1 und 19.

Eine derartige Auswahlvorrichtung sowie eine derartiges Auswahlverfahren sind vom Markt her im Zusammenhang mit Automatikgetrieben bekannt. Hierbei ist der unverminderte Trend zu beobachten, dass mechanische Systeme immer weiter durch elektronische Steuerungen ersetzt werden. Besonders im Bereich der Getriebe von Kraftfahrzeugen werden die rein mechanischen Handschaltgetriebe mehr und mehr z.B. durch automatisierte Handschaltgetriebe ersetzt, bei denen der Fahrerwunsch, also die gewünschte Gangstufe, über Sensoren oder Schalter erfasst wird und eine elektronische Getriebesteuerung dann die Gang- und Kupplungssteuerung übernimmt.

Bei Automatikgetrieben, die als Stufengetriebe oder als stufenlose Getriebe ausgeführt sein können, wird häufig eine integrierte mechatronische Getriebesteuerung eingesetzt. Hierbei kann die mechanische Verbindung zwischen einem Bedienelement und dem Getriebe entfallen. Statt dessen wird der Fahrerwunsch, also die gewünschte Fahrstufe, wie bei den automatisierten Handschaltgetrieben über eine elektrische Verbindung zur Getriebesteuerung übertragen, die dann die ausgewählte Fahrstufe einstellt. Zusätzlich ist bei diesen Automatikgetrieben ein manueller Mode realisierbar, bei dem der Wechsel der Gangstufe nicht automatisch, sondern ähnlich wie bei Parkleitsystemen, als ABS-Sensoren oder als Sensoren des beim Handschaltgetriebe als Folge eines Fahrerwunsches erfolgt.

Die bei allen diesen Getriebevarianten erforderliche manuelle Fahr- bzw. Gangstufenauswahl wird vielfach als lästig empfunden. Die Schrift EP-A-0 770 979 wird als nächstliegender Stand der Technik betrachtet.

Es ist eine erste Aufgabe der vorliegenden Erfindung, eine Auswahlvorrichtung der eingangs genannten Art derart weiterzubilden, dass sie zur Erhöhung des Fahrkomforts des Kraftfahrzeugs beiträgt.

Diese Aufgabe ist erfindungsgemäß gelöst durch eine Auswahlvorrichtung mit den Merkmalen gemäß Anspruch 1.

Unter den Oberbegriff "Getriebe" fallen im Rahmen der vorliegenden Erfindung sowohl Automatikgetriebe als auch Handschaltgetriebe.

Erfindungsgemäß wird der Betriebszustand eines Kraftfahrzeugs nicht, wie dies bei den Automatikgetrieben des Standes der Technik der Fall ist, nur über eine Drehzahlerfassung realisiert, sondern es wird mindestens ein weiterer drehzahlunabhängiger Betriebszustand des Kraftfahrzeugs erfasst. Sensoren, die derartige Betriebszustandsdaten bereitstellen, liegen bei vielen Kraftfahrzeugen schon vor, z.B. als Positionsbestimmungssensoren bei GPS-Sensoren, als Abstandssensoren bei Parkleitsystemen, als ABS-Sensoren oder als Sensoren des elektronischen Motormanagements. Die Betriebszustandserfassung ist daher mit moderatem zusätzlichem technischem Aufwand realisierbar. Die mit der Erfassungseinrichtung zusammenarbeitende Steuer-/Recheneinheit kann eine unaufwendige Logikschaltung sein. So kann z.B. dann, wenn vor dem Fahrzeug mit Hilfe eines Abstandssensors ein Hindernis erkannt wurde, über einen Logikbaustein die Vorgabe der Fahrstufe "R" (Rückwärtsfahrt) ausgegeben werden. Neben dieser einfache Ausführung der Steuer-/Recheneinheit sind natürlich auch komplexere prozessorgesteuerte Ausführungen denkbar, die eine Vielzahl von erfassten Betriebszustandsparametern zur Vorgabe einer Fahrstufe oder Gangstufe verarbeiten. Insgesamt ergibt sich eine Auswahlvorrichtung, die in den vielen in der Praxis vorkommenden Betriebszuständen des Kraftfahrzeugs dem Fahrer die manuelle Vorgabe einer Fahrstufe oder Gangstufe abnimmt, so dass der Fahrkomfort des Kraftfahrzeugs deutlich erhöht ist.

Beim Einsatz eines Fahrzeugbussystems gemäß Anspruch 2 lässt sich die Steuer-/Recheneinheit ohne großen zusätzlichen Aufwand in ein bereits vorhandenes Fahrzeug-Kommunikationssystem integrieren, so dass z.B. die Übertragung von Betriebszustandsdaten einfach möglich ist.

Liegt gemäß Anspruch 3 eine elektronische Getriebesteuerung des Kraftfahrzeugs bereits vor, lässt sich diese im einfachsten Fall durch wenige zusätzliche Logikbausteine einfach zur Steuer-/Recheneinheit der erfindungsgemäßen Auswahlvorrichtung ausbauen.

Ein Hindernissensor gemäß Anspruch 4 ermöglicht z.B. bei stehendem Fahrzeug eine einfache Auswahl, in welcher Fahrtrichtung eine Weiterfahrt erfolgen soll.

Ein Abstandssensor gemäß Anspruch 5 führt zu einer verfeinerten Erfassung des Betriebszustandes des Kraftfahrzeugs. Detektiert wird hierbei nicht nur, ob ein Hindernis generell vorliegt, sondern auch, welchen Abstand es zum Kraftfahrzeug hat. Die Informationen, die über einen derartigen Sensor erfasst werden können, sind beispielsweise auch im Fahrzeugkolonnenverkehr zur Auswahl einer geeigneten Fahrstufe oder Gangstufe einsetzbar.

Hindernissensoren gemäß Anspruch 6 haben sich als zuverlässig und ausreichend präzise herausgestellt.

Die Ausführung der Erfassungseinrichtung gemäß Anspruch 7 gewährleistet eine die meisten hindernisrelevanten Betriebszustände eines Kraftfahrzeugs abdeckende Erfassungseinrichtung.

Mittels einer Erfassungseinrichtung mit einer Positionsbestimmungseinrichtung gemäß Anspruch 8 ist, eine entsprechende Zielvorgabe vorausgesetzt, eine Auswahl der Fahrstufe oder Gangstufe anhand einer erfassten Momentanposition des Kraftfahrzeugs und der Zielvorgabe möglich. Die Auswahlvorrichtung kann dann z.B. entscheiden, ob bei der Fahrt auf einer Autobahn eine bestimmte Ausfahrt angefahren wird und eine entsprechende Auswahl der Fahrstufe oder Gangstufe (Herunterschalten beim Ausfahren, alternativ Beibehalten der Fahrstufe oder Gangstufe bei der Weiterfahrt auf der Autobahn) vorgeben.

Ein GPS-System gemäß Anspruch 9 ist mittlerweile bei vielen Kraftfahrzeugen im Einsatz und gewährleistet eine präzise Positionsbestimmung.

Die Auswertung der Sensoren eines Antiblockiersystems (ABS) gemäß Anspruch 10 ermöglicht die Auswahl einer z.B. an widrige Straßenverhältnisse angepassten Fahrstufe oder Gangstufe.

Über die Integration der Motorsteuerung gemäß Anspruch 11 ist der Erfassungseinrichtung z.B. die Motordrehzahl zugänglich, so dass die Auswahlvorrichtung die Funktion eines Automatikgetriebes erfüllen kann. Zudem kann auch eine Auswertung weiterer drehzahlunabhängiger Sensoren der Motorsteuerung erfolgen, so dass eine Auswahl der Fahrstufe oder Gangstufe anhand des Motorzustandes geschehen kann. Ist z.B. aufgrund einer erhöhten Schmiermitteltemperatur nicht die volle Drehzahlfestigkeit des Motors gewährleistet, kann die Auswahl der Fahrstufe oder Gangstufe derart erfolgen, dass ein bestimmter Drehzahlgrenzwert nicht überschritten wird.

Über die Erfassung von Daten einer elektronischen Drosselklappensteuerung gemäß Anspruch 12 kann die Stellung des Gaspedals des Fahrzeugs ermittelt werden. Dies kann z.B. dazu eingesetzt werden, das Gaspedal zur Bestätigung der ausgewählten Fahrstufe oder Gangstufe heranzuziehen. Nach erfolgter Auswahl einer Fahrstufe oder Gangstufe durch die Auswahlvorrichtung betätigt der Fahrer hierbei das Gaspedal. Diese Betätigung wird über die Drosselklappensteuerung erfasst, von der Erfassungseinrichtung erkannt und löst die Vorgabe der ausgewählten Gangstufe oder Fahrstufe aus.

Ein Speicher gemäß Anspruch 13 ermöglicht die Erfassung von Informationen aus einem zurückliegenden Betriebszyklus des Kraftfahrzeugs. Dies kann zur Betriebszustandsbestimmung herangezogen werden.

Bei einem Speicher gemäß Anspruch 14 lassen sich aus der abgespeicherten Historie detaillierte Betriebszustandsinformationen aus zurückliegenden Betriebszyklen des Kraftfahrzeugs gewinnen. Dies kann z.B. zur Bestimmung der aktuellen Fahrzeugorientierung (vorwärts/rückwärts) herangezogen werden, wenn dies nicht über eine Abstandssensorik möglich ist. Zudem kann durch Vergleich mit bereits zurückliegenden Betriebszyklen eine bei einem erneut durchlaufenen Betriebszyklus optimierte Auswahl der Fahrstufe oder Gangstufe erfolgen.

Ein Fuzzy-Logic-System gemäß Anspruch 15 sowie ein neuronales Netzwerk gemäß Anspruch 16 eignen sich gut zum Aufbau einer Steuer-/Recheneinheit mit dynamischer Anpassung der Vorgabe der Fahrstufe oder Gangstufe.

Eine Sprachausgabe gemäß Anspruch 17 erhöht den Komfort der Auswahlvorrichtung.

Um dem Fahrer die Möglichkeit des manuellen Eingriffs in die Auswahl der Fahrstufe oder Gangstufe zu bieten, ist ein Bedienelement zum Wechseln der Fahrstufe oder Gangstufe vorgesehen. Eine Spracheingabe gemäß Anspruch 18 erhöht den Komfort der Auswahlvorrichtung.

Eine weitere Aufgabe der Erfindung ist es, ein Auswahlverfahren gemäß dem Oberbegriff des Anspruchs 19 derart weiterzubilden, dass der Fahrkomfort des Kraftfahrzeugs erhöht ist.

Diese Aufgabe ist erfindungsgemäß gelöst durch ein Auswahlverfahren mit den Merkmalen des Anspruchs 19.

Die Vorteile dieses Auswahlverfahrens ergeben sich aus den oben geschilderten Vorteilen der Auswahlvorrichtung.

Bei einem Auswahlverfahren gemäß Anspruch 19 ist durch die zwischengeschaltete Bestätigung die Sicherheit des Auswahlverfahrens erhöht.

Eine Bestätigung über das Gaspedal gemäß Anspruch 22 ist besonders einfach.

Ein Ausführungsbeispiel der Erfindung wird nachfolgend anhand der Zeichnung näher erläutert; es zeigen:
- Fig. 1: eine schematische Darstellung des Cockpits eines Kraftfahrzeugs mit Lenkrad und Instrumentenfeld;
- Fig. 2: ein schematisches Blockdiagramm einer Auswahlvorrichtung für eine Fahrstufe oder eine Gangstufe bei einem Getriebe eines Kraftfahrzeugs; und
- Fig. 3: ein Ablaufdiagramm eines mit der Auswahlvorrichtung gemäß Fig. 2 durchgeführten Auswahlverfahrens beim Starten des Kraftfahrzeugs.

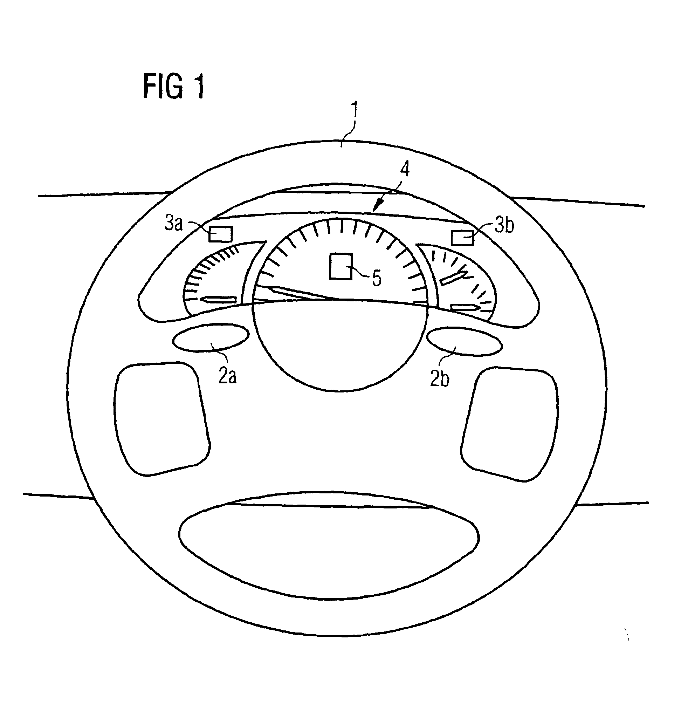

In das Lenkrad 1 eines Kraftfahrzeugs, von dem in Fig. 1 ein Ausschnitt des Cockpits dargestellt ist, sind zwei Bedienelemente 2a und 2b, z.B. in Form von Tipptasten, integriert. Durch Betätigen dieser Bedienelemente 2a, 2b hat der Fahrer die Möglichkeit, in einem automatischen Getriebemodus die eingestellte Fahrstufe oder in einem manuellen Getriebemodus die eingelegte Gangstufe zu wechseln. Alternativ können die Bedienelemente 2a, 2b auch in Form von Schalthebeln an der Lenksäule angeordnet sein.

Über Funktionsanzeigen 3a und 3b, die im Instrumentenfeld 4 des Kraftfahrzeugs angeordnet sind, wird dem Fahrer in Form einer optischen Anzeige eine Information über die aktuelle Funktion der Bedienelemente 2a bzw. 2b gegeben. Zusätzlich wird dem Fahrer die aktuell eingestellte Fahrstufe oder Gangstufe über eine Fahrstufenanzeige 5 angezeigt.

Die Informationen über die Funktion der Bedienelemente 2a, 2b und die momentan eingestellte Fahrstufe oder Gangstufe können, wie in Fig. 1 dargestellt, in getrennten Anzeigefeldern (Displays) oder auch in einem gemeinsamen Anzeigefeld angezeigt werden. Bei getrennten Anzeigefeldern ist es aus ergonomischen Gründen vorteilhaft, die Position des jeweiligen Anzeigefeldes an die Lage des zugehörigen Bedienelements anzupassen, also z.B. dem in Fig. 1 rechten Bedienelement 2b die rechte Funktionsanzeige 3b zuzuordnen.

Alternativ zur in Fig. 1 dargestellten Ausführung, bei der die Funktionsanzeigen 3a, 3b in das Instrumentenfeld 4 integriert sind, können die Funktionsanzeigen wie die Bedienelemente 2a, 2b ebenfalls in das Lenkrad 1 integriert und z.B. auf den Bedienelementen 2a, 2b angeordnet sein. Durch eine derartige Integration der Funktionsanzeigen in das Lenkrad 1 ist eine Zuordnung der Anzeige zum entsprechenden mit dem Lenkrad 1 bewegten Bedienelement 2a, 2b auch bei Lenkeinschlägen im Bereich von 180° zweifelsfrei möglich.

Durch Auswerten des Lenkwinkels kann die Anzeige in den Funktionsanzeigen dann, wenn diese in das Lenkrad 1 integriert sind, zusätzlich dem Lenkwinkel angepasst und derart gekippt werden, dass ein Ablesen auch bei verdrehtem Lenkrad 1 problemlos möglich ist.

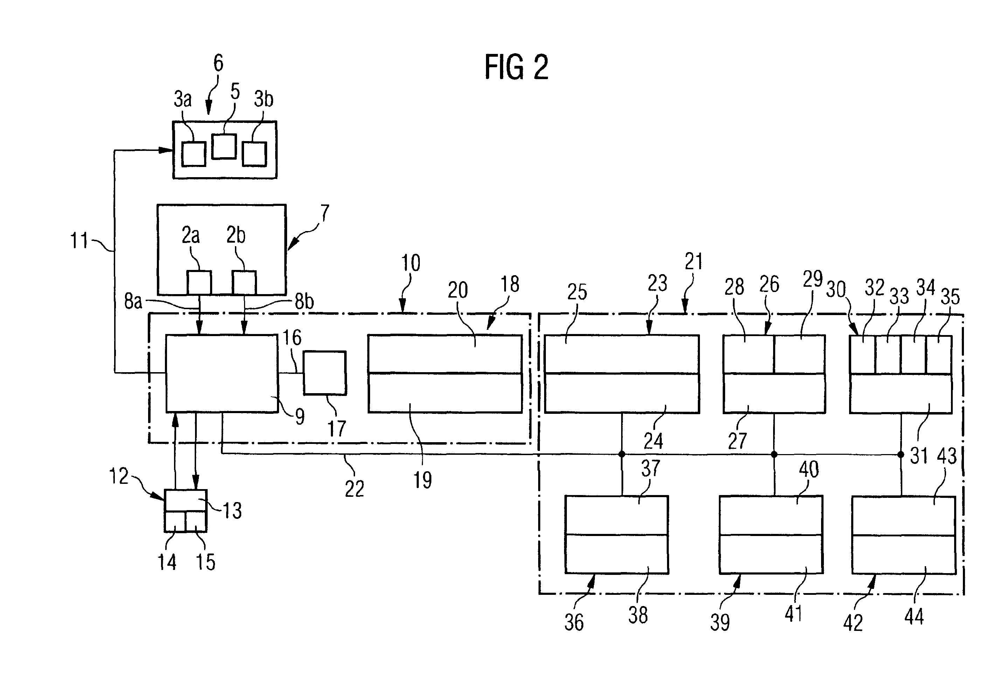

Die Bedienelemente 2a, 2b sowie die Funktionsanzeigen 3a, 3b sind Teil einer Auswahlvorrichtung für die Fahrstufe oder die Gangstufe bei einem Getriebe des Kraftfahrzeugs, welche in Fig. 2 schematisch dargestellt ist. Dort sind die Funktionsanzeigen 3a, 3b sowie die Fahrstufenanzeige 5 zu einer Anzeigeeinheit 6 zusammengefasst. Ebenso sind die Bedienelemente 2a, 2b zu einer Bedieneinheit 7 zusammengefasst.

Über Signalleitungen 8a, 8b stehen die Bedienelemente 2a, 2b der Bedieneinheit 7 mit einem Auswahlrechner 9 für die Fahrstufe oder Gangstufe in Verbindung. Letzterer ist Teil einer Steuer-/Recheneinheit 10 der Auswahlvorrichtung. Über eine Signalleitung 11 steht der Auswahlrechner 9 mit der Anzeigeeinheit 6 in Signalverbindung.

Als zusätzliche Bedienmöglichkeit für den Fahrer zur Auswahl der Fahrstufe oder Gangstufe sowie als zusätzliche Anzeigeeinheit für die ausgewählte Fahrstufe oder Gangstufe weist die Auswahlvorrichtung eine Sprachkommunikationseinheit 12 auf. Diese umfasst eine Sprachsteuerung 13, ein Mikrofon 14 sowie einen Lautsprecher 15 und ist über einer bidirektionale Signalleitung mit dem Auswahlrechner 9 verbunden.

Über eine Datenleitung 16 steht der Auswahlrechner 9 mit einem wiederbeschreibbaren Speicher 17 in Verbindung.

Zur Steuer-/Recheneinheit 10 gehört ferner eine Auswahlsteuerung 18 für die ausgewählte Gangstufe oder Fahrstufe. Die Auswahlsteuerung 18 umfasst eine Auswahlsteuereinheit 19 sowie Getriebeaktuatoren für das ansonsten nicht dargestellte Getriebe des Kraftfahrzeugs, die in Fig. 2 zu einem Block 20 zusammengefasst sind.

Der Auswahlrechner 9 und die Auswahlsteuerung 18 stehen miteinander und mit einer Erfassungseinrichtung 21 für einen Betriebszustand des Kraftfahrzeugs über einen Datenbus 22, z.B. über einen CAN-(Controller Area Network-)Bus, in Verbindung.

Zur Positionsbestimmung des Kraftfahrzeuges weist die Erfassungseinrichtung 21 ein GPS-System 23 mit einem GPS-Rechner 24 und einer GPS-Sende-/Empfangseinheit 25 auf.

Ferner umfasst die Erfassungseinrichtung 21 zur Erkennung von Hindernissen in der Umgebung des Kraftfahrzeugs eine Abstandssensorik 26 mit einem Abstandsrechner 27, einem vorderen Abstandssensor 28 zur Überwachung der Umgebung der Front des Kraftfahrzeugs und einem hinteren Abstandssensor 29 zur Überwachung der Umgebung des Hecks des Kraftfahrzeugs. Die Abstandssensoren 28, 29 können als Ultraschall- oder Radarsensoren ausgeführt sein.

In die Erfassungseinrichtung 21 ist zudem ein ABS-System 30 integriert, welches einen ABS-Rechner 31 sowie vier Rad-Drehzahlsensoren 32 bis 35 umfasst. Über die Radsensoren 32 bis 35 sind sowohl die Drehzahl, als auch die Drehrichtung der einzelnen Räder des Kraftfahrzeugs erfassbar.

Weiterhin gehört zur Erfassungseinrichtung 21 eine elektronische Drosselklappensteuerung 36 mit einem Steuerrechner 37 und einer Drosselklappen-Sensor-/Aktuatoreinheit 38, über die die momentane Stellung des Gaspedals des Kraftfahrzeugs abrufbar ist.

Eine elektronische Motorsteuerung 39 mit einem Motorsteuerrechner 40 und einer Motorsteuerungs-Sensor-/Aktuatoreinheit 41, zu der die Erfassung und Ansteuerung einer Kraftstoffpumpe sowie eines Anlassers des Kraftfahrzeugs gehören, sind ebenfalls Teil der Erfassungseinrichtung 21. Über die Motorsteuerungs-Sensor-/Aktuatoreinheit 41 ist zudem die aktuelle Motordrehzahl des Kraftfahrzeugmotors abrufbar.

Stellvertretend für zusätzliche Erweiterungseinheiten, mit denen die Erfassungseinrichtung 21 aufgerüstet werden kann, ist in Fig. 2 eine Erweiterungseinheit 42 mit einem Rechner 43 und einer Sensor-/Aktuatoreinheit 44 dargestellt. Ein Beispiel für eine solche zusätzliche Erweiterungseinheit ist ein Sensor für die Lage eines Cabrioverdecks oder eines Hardtops des Kraftfahrzeugs.

Das GPS-System 23, die Abstandssensorik 26, das ABS-System 30, die elektronische Drosselklappensteuerung 36, die elektronische Motorsteuerung 39 sowie ggf. die mindestens eine Erweiterungseinheit 42 stehen untereinander über den Datenbus 22 in Signalverbindung.

Die Steuer-/Recheneinheit 10 mit dem Auswahlrechner 9 und der Auswahlsteuerung 18 kann als eigenständiges Gerät ausgeführt sein. Alternativ kann es auch als Funktionsteil in eine schon existierende elektronische Getriebesteuerung integriert sein.

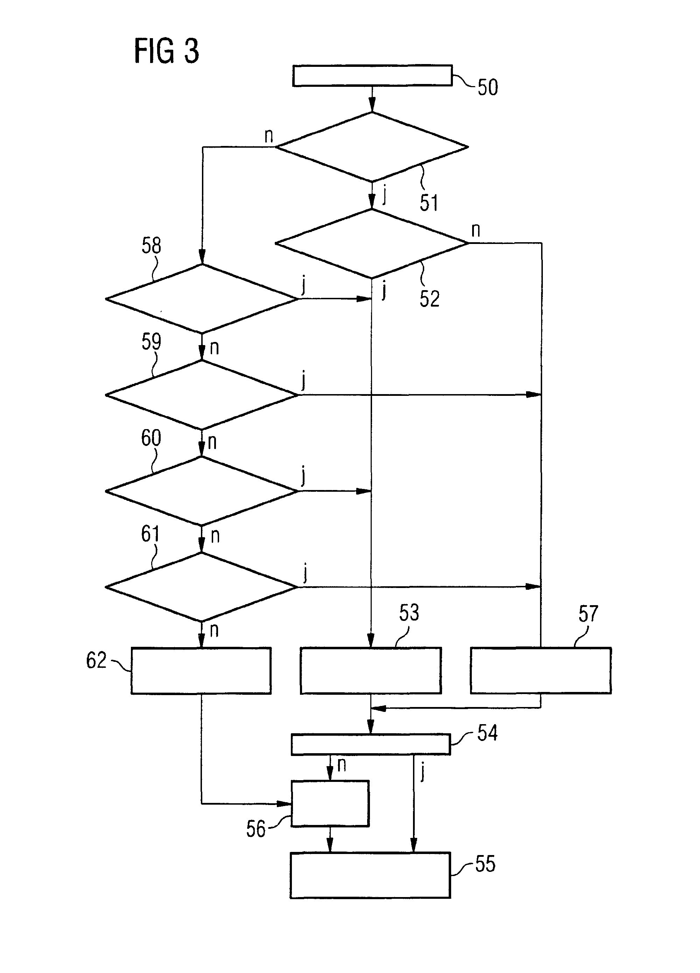

Die Funktionsweise der Auswahlvorrichtung wird nachfolgend anhand eines durch das Ablaufdiagramm von Fig. 3 illustrierten Auswahlverfahrens beschrieben:

Nach dem Einschalten der Zündung (Einschaltschritt 50) werden zunächst die Komponenten der Auswahlvorrichtung initialisiert. Dabei liest der Auswahlrechner 9 aus dem Speicher 17 die dort ggf. im Rahmen des letzten Betriebszyklus des Kraftfahrzeugs abgelegten Daten ein.

In dem Speicher 17 ist unter anderem eine Marke (Flag) "bekannter Standort" abgelegt, die anzeigt, ob das Kraftfahrzeug am Ende des letzten Betriebszyklus an einem Ort abgestellt wurde, der vom Auswahlrechner 9 anhand der Betriebshistorie als bekannter Standort erkannt wurde. Die Betriebshistorie enthält Daten zur Positionsinformationen aus dem GPS-System 23, Informationen zum Wechsel der Fahrstufe oder Gangstufe durch die Auswahlsteuerung 18 und ggf. weitere Informationen. Ein derartiger bekannter Standort kann der übliche Stellplatz des Kraftfahrzeugs in einer Garage sein.

In einem Abfrageschritt 51 wird die Marke "bekannter Standort" im Speicher 17 durch den Auswahlrechner 9 im Rahmen eines Vergleichs abgefragt. Ist die Marke "bekannter Standort" gesetzt (Auswahlvariante "j"), d.h. wenn ein bekannter Standort vorliegt, wird in einem weiteren Abfrageschritt 52 durch den Auswahlrechner 9 ermittelt, in welcher Fahrtrichtung das Kraftfahrzeug in den bekannten Standort eingeparkt wurde. Dies erfolgt durch Einlesen und Abfragen einer Marke "vorwärts eingeparkt", die im Speicher 17 beim letzten Betriebszyklus des Kraftfahrzeugs vom Ausfallrechner 9 durch Auswertung entsprechender Daten der Erfassungseinrichtung 21 abgelegt wurde.

Wenn die Marke "vorwärts eingeparkt" gesetzt ist (Auswahlvariante "j" nach Schritt 52), wählt der Auswahlrechner 9 den Schaltvorschlag "R" (Rückwärtsfahrt) aus und gibt diese Auswahl in einem Anzeigeschritt 53 auf dem Fahrstufenanzeiger 5 und zusätzlich mittels des Lautsprechers 15 der Sprachkommunikationseinheit 12 aus.

Im Zuge eines Bestätigungsschritts 54 kann der Fahrer die vom Auswahlrechner 9 ausgewählte Fahrstufe oder Gangstufe akzeptieren oder verwerfen. Dies kann durch Betätigen eines der Bedienelemente 2a, 2b oder eines anderen hierfür vorgesehenen Bedienelements geschehen. Die Bestätigung kann z.B. auch durch kurzes Antippen des Gaspedals des Kraftfahrzeugs oder durch eine entsprechende Spracheingabe in das Mikrophon 14 der Sprachkommunikationseinheit 12 erfolgen. Im Falle des Akzeptierens (Auswahlvariante "j") erfolgt in einem Vorgabeschritt 55 eine Vorgabe der durch den Auswahlrechner 9 ausgewählten Fahrstufe oder Gangstufe über den Datenbus 22 an die Auswahlsteuereinheit 19 der Auswahlsteuerung 18. Diese prüft anhand der über die Stellung der Getriebeaktuatoren 20 vorliegenden Getriebeinformation in einem Sicherungsschritt (nicht dargestellt) die Plausibilität der vorgegebenen Fahrstufe oder Gangstufe und legt bei erfolgreicher Plausibilitätsprüfung die vorgegebene Fahrstufe oder Gangstufe über die Getriebeaktuatoren 20 ein.

Wird im Bestätigungsschritt 54 die angezeigte, vom Auswahlrechner 9 ausgewählte Fahrstufe oder Gangstufe verworfen (Auswahlvariante "n"), erfolgt durch den Fahrer über die Bedieneinheit 7 eine persönliche Vorgabe der Fahrstufe oder Gangstufe in einem Bedienschritt 56, z.B. über die Bedienelemente 2a, 2b oder das Mikrophon 14. Die persönlich ausgewählte Fahrstufe oder Gangstufe wird dann im Vorgabeschritt 55 in eine eingelegte Fahrstufe oder Gangstufe umgesetzt, wie oben beschrieben.

Ergibt der Abfrageschritt 52, dass die Markierung "vorwärts eingeparkt" nicht gesetzt ist (Auswahlvariante "n"), so wird durch den Auswahlrechner 9 die Fahrstufe oder Gangstufe "D" (Vorwärtsfahrt) ausgewählt und in einem Anzeigeschritt 57 angezeigt. Anschließend geht das Auswahlverfahren mit dem Bestätigungsschritt 54 weiter, wie oben beschrieben.

Ergibt der Abfrageschritt 51, dass die Marke "bekannter Standort" nicht gesetzt ist (Auswahlvariante "n"), so wird vom Auswahlrechner 9 zunächst über den Datenbus 22 und den Abstandsrechner 27 der vordere Abstandssensor 28 abgefragt. Dies geschieht in einem Abfrageschritt 58. Ergibt diese Abfrage, dass sich vor dem Kraftfahrzeug ein Hindernis befindet (Auswahlvariante "j" nach Schritt 58), wird die Fahrstufe "R" ausgewählt und das Auswahlverfahren wird mit dem Anzeigeschritt 53, wie oben beschrieben, fortgesetzt.

Ergibt der Abfrageschritt 58, dass sich kein Hindernis vor dem Kraftfahrzeug befindet (Auswahlvariante "n"), so wird in einem weiteren Abfrageschritt 59 vom Auswahlrechner 9 über den Datenbus 22 und den Abstandsrechner 27 der hintere Abstandssensor 29 abgefragt. Ergibt sich ein Hindernis hinter dem Kraftfahrzeug (Auswahlvariante "j" nach Schritt 59), so wird die Fahrstufe "D" ausgewählt und das Auswahlverfahren mit dem Anzeigeschritt 57 fortgesetzt, wie oben beschrieben.

Ergibt sich beim Abfrageschritt 59 kein Hindernis hinter dem Kraftfahrzeug, so erfolgt in einem Abfrageschritt 60 durch den Auswahlrechner 9 die Abfrage einer Zielvorgabe. Bei dieser kann es sich um eine im Speicher 17 abgelegte Zielposition handeln. Alternativ kann der Fahrer über die Anzeigeeinheit 6 und/oder über die Sprachkommunikationseinheit 12 zur Eingabe einer Zielvorgabe aufgefordert werden.

Aus der Zielvorgabe und der über die Daten aus dem Speicher 17 bzw. über die mittels der Erfassungseinrichtung 21 vorliegenden Daten erschließbaren Orientierung des Kraftfahrzeugs errechnet der Auswahlrechner 9 bei Vorliegen einer Zielvorgabe nach dem Abfrageschritt 60 eine Fahrstufe. Ergibt sich bei dieser Berechnung durch den Vergleich der Zielvorgabe mit der aktuellen Stellung des Kraftfahrzeugs, dass eine Rückwärtsfahrt erforderlich ist (Auswahlvariante "j" nach dem Abfrageschritt 60), so wird mit dem Anzeigeschritt 53 fortgesetzt, wie oben beschrieben.

Ergibt sich beim Abfrageschritt 60, dass keine Rückwärtsfahrt erforderlich ist (Auswahlvariante "n"), so wird beim Vergleich der Zielvorgabe mit der aktuellen Position des Kraftfahrzeugs vom Auswahlrechner 9 im Rahmen eines Abfrageschritts 61 ermittelt, ob zum Erreichen der Zielposition eine Vorwärtsfahrt durchgeführt werden sollte. Ist dies der Fall (Auswahlvariante "j" nach Schritt 61), so wird mit dem Anzeigeschritt 57 fortgesetzt, wie oben beschrieben. Wenn dies nicht der Fall ist (Auswahlvariante "n"), was z.B. in Fällen auftreten kann, bei denen keine Zielvorgabe vorliegt oder bei denen das Kraftfahrzeug quer zu eingegebenen Zielposition angeordnet ist, so wird in einem Anzeigeschritt 62 über die Anzeigeeinheit 6 und/oder die Sprachkommunikationseinheit 12 ausgegeben "keine automatische Fahrstufen- bzw. Gangstufenauswahl möglich".

Das Verfahren wird dann mit dem Bedienschritt 56 fortgesetzt, wie oben beschrieben.

Die Anzeige in den Anzeigeschritten 53, 57 und 62 kann z.B. durch eine blinkende Darstellung zusätzlich hervorgehoben werden.

Entsprechende Auswahlverfahren ergeben sich bei anderen Fahrsituationen:

Beim Ausparken aus einer Parklücke wertet der Auswahlrechner 9 die Signale der Abstandssensoren 28, 29 und zusätzlich ggf. die Signale des GPS-Systems 23 entsprechend dem oben beschriebenen detaillierten Auswahlverfahren aus. Wird ein Hindernis erkannt, wird vom Auswahlrechner 9 die dem Hindernis entgegengesetzte Fahrtrichtung durch Anzeige mit der Anzeigeeinheit 6 vorgeschlagen.

Bei einer Fahrt mit einer Zieleingabe im GPS-System werden die angezeigten Fahrstufen oder Gangstufen anhand einer Auswertung insbesondere der Daten des GPS-Systems 23 durchgeführt. Über die Abfrage der Motordrehzahl, die dem Auswahlrechner 9 über die elektronische Motorsteuerung 39 zugänglich ist, ist zudem mit der Auswahlvorrichtung ein bekannter automatischer Fahrstufenwechsel möglich. Zudem können bei Bedarf, z.B. im Kolonnenverkehr oder bei widrigen Straßenverhältnissen, die Informationen der Abstandssensorik 26 sowie des ABS-Systems 30 hinzugezogen werden.

Bestimmte, öfter wiederkehrende Fahrtstrecken können zur erleichterten Auswahl einer Fahrstufe oder Gangstufe herangezogen werden. Hierzu kann der Auswahlrechner 9 als lernfähiges System, z.B. als neuronales Netzwerk, ausgeführt sein. Anhand der im Speicher 17 abgelegten Betriebshistorie des Kraftfahrzeugs, d.h. der zeitlichen Abfolge der zuletzt gewählten Fahrstufen oder Gangstufen lässt sich durch Vergleich ähnlicher Betriebshistorien eine optimierte Auswahl der Gangstufe oder Fahrstufe errechnen.

Der Auswahlrechner 9 kann auch als Fuzzy-Logic-System ausgeführt sein.

## Patentansprüche

1. Auswahlvorrichtung für eine Fahrstufe oder eine Gangstufe bei einem Getriebe eines Kraftfahrzeugs,
**gekennzeichnet durch**
a) eine Erfassungseinrichtung (21), die so ausgelegt ist, dass sie zumindest einen motordrehzahlunabhängigen Betriebszustand des Kraftfahrzeugs erfasst,
b) eine mit der Erfassungseinrichtung (21) zusammenarbeitende Steuer-/Recheneinheit (10) zur Ermittlung einer Fahrstufe oder Gangstufe aus dem erfassten Betriebszustand und zur Vorgabe der Fahrstufe oder Gangstufe,
c) eine mit der Steuer-/Recheneinheit (10) in Signalverbindung stehende Anzeigeeinheit (6, 12) für die ermittelte Fahrstufe oder Gangstufe und
d) mindestens ein mit der Steuer-/Recheneinheit (10) in Signalverbindung stehendes Bedienelement (7, 12) zum Bestätigen der angezeigten Fahrstufe oder Gangstufe.

2. Auswahlvorrichtung nach Anspruch 1, **dadurch gekenn-** zeichnet, dass die Steuer-/Recheneinheit mit einem Fahrzeugbussystem (22) verbunden ist.

3. Auswahlvorrichtung nach Anspruch 1 oder 2, **dadurch gekennzeichnet, dass** die Steuer-/Recheneinheit (10) Teil einer elektronischen Getriebesteuerung des Kraftfahrzeugs ist.

4. Auswahlvorrichtung nach einem der vorhergehenden Ansprüche, **dadurch gekennzeichnet, dass** die Erfassungseinrichtung (21) mindestens einen die Umgebung des Kraftfahrzeugs erfassenden Hindernissensor (28, 29) umfasst.

5. Auswahlvorrichtung nach Anspruch 4, **dadurch gekenn- zeichnet**, dass der Hindernissensor (28, 29) als Abstandssensor ausgeführt ist.

6. Auswahlvorrichtung nach Anspruch 4 oder 5, **dadurch gekennzeichnet, dass** der Hindernissensor (28, 29) als Ultraschallsensor oder Radarsensor ausgeführt ist.

7. Auswahlvorrichtung nach einem der Ansprüche 4 bis 6, **dadurch gekennzeichnet, dass** mindestens zwei Hindernissensoren (28, 29) vorgesehen sind, von denen einer (28) den Bereich vor und der andere (29) den Bereich hinter dem Kraftfahrzeug erfasst.

8. Auswahlvorrichtung nach einem der vorhergehenden Ansprüche, **dadurch gekennzeichnet, dass** die Erfassungseinrichtung (21) eine Bestimmungseinrichtung (23) für die Position des Kraftfahrzeugs umfasst.

9. Auswahlvorrichtung nach Anspruch 8, **dadurch gekenn-** zeichnet, dass die Positionsbestimmungseinrichtung als GPS-System (23) ausgeführt ist.

10. Auswahlvorrichtung nach einem der vorhergehenden Ansprüche, **dadurch gekennzeichnet, dass** ein Antiblockiersystem (30) des Kraftfahrzeugs Teil der Erfassungseinrichtung (21) ist.

11. Auswahlvorrichtung nach einem der vorhergehenden *Ansprü*che, **dadurch gekennzeichnet, dass** eine elektronische Motorsteuerung (39) Teil der Erfassungseinrichtung (21) ist.

12. Auswahlvorrichtung nach einem der vorhergehenden Ansprüche, **dadurch gekennzeichnet , dass** eine elektronische Drosselklappensteuerung (36) Teil der Erfassungseinrichtung (21) ist.

13. Auswahlvorrichtung nach einem der vorhergehenden Ansprüche, **dadurch gekennzeichnet, dass** die Steuer-/Recheneinheit (10) einen Speicher (17) zur Ablage zumindest eines Betriebsparameters des Kraftfahrzeugs aufweist.

14. Auswahlvorrichtung nach Anspruch 13, **dadurch gekennzeichnet, dass** der Speicher (17) derart ausgeführt ist, dass in ihm die Historie einer Mehrzahl zuletzt gewählter Fahrstufen oder Gangstufen abgelegt sind, wobei die Steuer-/Recheneinheit (10) eine Auswerteeinrichtung (9) zur dynamischen Anpassung der Vorgabe der Fahrstufe oder Gangstufe aufweist.

15. Auswahlvorrichtung nach Anspruch 14, **dadurch ge- kennzeichnet,** dass die Auswerteeinrichtung (9) als Fuzzy-Logic-System ausgeführt ist.

16. Auswahlvorrichtung nach Anspruch 14 oder 15, **dadurch gekennzeichnet, dass** die Auswerteeinrichtung (9) als neuronales Netzwerk ausgeführt ist.

17. Auswahlvorrichtung nach einem der vorhergehenden Ansprüche, **dadurch gekennzeichnet, dass** die Anzeigeeinheit (6, 12) eine Sprachausgabeeinrichtung (15) umfasst.

18. Auswahlvorrichtung nach einem der vorhergehenden Ansprüche, **dadurch gekennzeichnet, dass** das Bedienelement (7, 12) eine Spracheingabeeinrichtung (14) umfasst.

19. Auswahlverfahren für eine Fahrstufe oder eine Gangstufe bei einem Getriebe eines Kraftfahrzeugs, **gekennzeichnet durch** folgende Schritte:
a) Erfassen (51, 52, 58 bis 61) eines **durch** mindestens einen drehzahlunabhängigen Parameter zu beschreibenden Betriebszustandes des Kraftfahrzeugs;
b) Ermitteln einer Fahrstufe oder Gangstufe aus dem erfassten Betriebszustand;
c) Anzeigen (53, 57) der ermittelten Fahrstufe oder Gangstufe;
d) Abfragen (54) einer Bedieneinrichtung (7, 12), **durch** deren Betätigen die angezeigte Fahrstufe oder Gangstufe bestätigt wird und
e) Vorgeben (55) der Fahrstufe oder Gangstufe abhängig von der Abfrage der Bedieneinrichtung (7, 12).

20. Auswahlverfahren nach Anspruch 19, **dadurch gekenn-** zeichnet, dass das Erfassen des Betriebszustandes das Erfassen (51) eines Fahrzeugsstandorts mufasst.

21. Auswahlverfahren nach Anspruch 20, **dadurch gekenn-** zeichnet, dass das Ermitteln der Fahrstufe oder Gangstufe umfasst:
a) Abfragen (60, 61) einer Zielvorgabe;
b) Berechnen einer Fahrtrichtung aus dem Fahrzeugstandort und der Zielvorgabe.

22. Auswahlverfahren nach einem der Ansprüche 19 bis 21, **dadurch gekennzeichnet, dass** die Bedieneinrichtung das Gaspedal des Kraftfahrzeugs umfasst.

## Claims

1. Selector device for a gear step or gear ratio in a gearbox in a motor vehicle,
**characterised by**
a) a recording device (21) configured such that it detects at least one operating state of the motor vehicle that is independent of the engine speed,
b) a control/processor unit (10) operating in conjunction with the recording device (10) to determine a gear step or gear ratio from the detected operating state and to predefine the gear step or gear ratio,
c) a display unit (6, 12) with a signal connection to the control/processor unit (10) for the determined gear step or gear ratio and
d) at least one operating element (7, 12) with a signal connection to the control/processor unit (10) to activate the displayed gear step or gear ratio.

2. Selector device according to claim 1, **characterised in that** the control/processor unit (10) is connected to a vehicle bus system (22).

3. Selector device according to claim 1 or 2, **characterised in that** the control/processor unit (10) is part of an electronic gearbox controller in the motor vehicle.

4. Selector device according to one of the preceding claims, **characterised in that** the recording device (21) includes at least one obstacle sensor (28, 29) detecting the environment of the motor vehicle.

5. Selector device according to claim 4, **characterised in that** the obstacle sensor (28, 29) is configured as a distance sensor.

6. Selector device according to claim 4 or 5, **characterised in that** the obstacle sensor (28, 29) is configured as an ultrasound sensor or a radar sensor.

7. Selector device according to one of claims 4 to 6, **characterised in that** at least two obstacle sensors (28, 29) are provided, one (28) of which detects the area in front and the other (29) the area behind the motor vehicle.

8. Selector device according to one of the preceding claims, **characterised in that** the recording device (21) includes a determination device (23) for the position of the motor vehicle.

9. Selector device according to claim 8, **characterised in that** the position determination device is configured as a GPS system (23).

10. Selector device according to one of the preceding claims, **characterised in that** an antilock system (30) in the vehicle is part of the recording device (21).

11. Selector device according to one of the preceding claims, **characterised in that** an electronic motor control unit (39) is part of the recording device (21).

12. Selector device according to one of the preceding claims, **characterised in that** an electronic throttle control unit (36) is part of the recording device (21).

13. Selector device according to one of the preceding claims, **characterised in that** the control/processor unit (10) has a storage unit (17) to store at least one operating parameter of the motor vehicle.

14. Selector device according to claim 13, **characterised in that** the storage unit (17) is configured such that it stores the history of a plurality of last selected gear steps or gear ratios, the control/processor unit (10) having an evaluation device (9) for the dynamic adjustment of the predefined gear step or gear ratio.

15. Selector device according to claim 14, **characterised in that** the evaluation device (9) is configured as a fuzzy logic system.

16. Selector device according to claim 14 or 15, **characterised in that** the evaluation device (9) is configured as a neural network.

17. Selector device according to one of the preceding claims, **characterised in that** the display unit (6, 12) includes a voice output device (15).

18. Selector device according to one of the preceding claims, **characterised in that** the operating element (7, 12) includes a voice input device (14).

19. Selection method for a gear step or gear ratio in a gearbox in a motor vehicle **characterised by** the following steps:
a) detection (51, 52, 58 to 61) of an operating state of the motor vehicle to be described by at least one parameter that is independent of the engine speed;
b) determination of a gear step or gear ratio from the detected operating state;
c) display (53, 57) of the determined gear step or gear ratio;
d) interrogation (54) of an operating device (7, 12) the activation of which causes the gear step or gear ratio to be confirmed and
e) predefinition (55) of the gear step or gear ratio as a function of the interrogation of the operating device (7, 12).

20. Selection method according to claim 19, **characterised in that** detection of the operating state includes the detection (51) of a vehicle location.

21. Selection method according to claim 20, **characterised in that** determination of the gear step or gear ratio includes:
a) requesting (60, 61) a predefined destination;
b) calculating a drive direction from the vehicle location and predefined destination.

22. Selection method according to one of claims 19 to 21, **characterised in that** the operating device includes the accelerator pedal of the motor vehicle.

## Revendications

1. Dispositif pour sélectionner un rapport de marche ou un rapport de vitesse pour une boîte de vitesses d'un véhicule automobile
**caractérisé par**
a) un dispositif de détection (21) conçu pour détecter au moins un état de fonctionnement du véhicule indépendant de la vitesse de rotation du moteur,
b) une unité de commande/de calcul (10) coopérant avec le dispositif de détection (21) pour déterminer un rapport de marche ou un rapport de vitesse à partir de l'état de fonctionnement détecté et pour définir un rapport de marche ou un rapport de vitesse,
c) une unité de signalisation (6, 12) en communication de signaux avec l'unité de commande/de calcul (10) pour le rapport de marche ou le rapport de vitesse déterminé, et
d) au moins un élément d'actionnement (7, 12) en communication de signaux avec l'unité de commande/de calcul (10) pour confirmer le rapport de marche ou le rapport de vitesse signalé.

2. Dispositif de sélection selon la revendication 1,
**caractérisé en ce que** l'unité de commande/de calcul est reliée à un système de bus (22) du véhicule.

3. Dispositif de sélection selon la revendication 1 ou 2,
**caractérisé en ce que** l'unité de commande/de calcul (10) fait partie d'une commande de boîte de vitesses électronique du véhicule.

4. Dispositif de sélection selon l'une quelconque des revendications précédentes,
**caractérisé en ce que** le dispositif de détection (21) comprend au moins un capteur d'obstacle (28, 29) détectant l'environnement du véhicule.

5. Dispositif de sélection selon la revendication 4,
**caractérisé en ce que** le capteur d'obstacle (28, 29) est un capteur de proximité.

6. Dispositif de sélection selon la revendication 4 ou 5,
**caractérisé en ce que** le capteur d'obstacle (28, 29) est un capteur à ultrasons ou à radar.

7. Dispositif de sélection selon l'une quelconque des revendications 4 à 6,
**caractérisé en ce qu'**au moins deux capteurs d'obstacle (28, 29) sont prévus dont l'un (28) détecte la zone devant et l'autre (29) la zone derrière le véhicule.

8. Dispositif de sélection selon l'une quelconque des revendications précédentes,
**caractérisé en ce que** le dispositif de détection (21) comprend un dispositif de localisation (23) du véhicule.

9. Dispositif de sélection selon la revendication 8,
**caractérisé en ce que** le dispositif de localisation est un système GPS (23).

10. Dispositif de sélection selon l'une quelconque des revendications précédentes,
**caractérisé en ce qu'**un système antiblocage (30) du véhicule fait partie du dispositif de détection (21).

11. Dispositif de sélection selon l'une quelconque des revendications précédentes,
**caractérisé en ce qu'**une commande électronique de moteur (39) fait partie du dispositif de détection (21).

12. Dispositif de sélection selon l'une quelconque des revendications précédentes,
**caractérisé en ce qu'**une commande de papillon des gaz (36) électronique fait partie du dispositif de détection.

13. Dispositif de sélection selon l'une quelconque des revendications précédentes,
**caractérisé en ce que** l'unité de commande/de calcul (10) présente une mémoire (17) pour stocker au moins un paramètre de fonctionnement du véhicule.

14. Dispositif de sélection selon la revendication 13,
**caractérisé en ce que** la mémoire (17) est conçue pour stocker l'historique d'une pluralité de rapports de marche ou de rapports de vitesse sélectionnés dernièrement, l'unité de commande/de calcul (10) présentant un dispositif d'exploitation (9) pour une adaptation dynamique de la définition du rapport de marche ou du rapport de vitesse.

15. Dispositif de sélection selon la revendication 14,
**caractérisé en ce que** le dispositif d'exploitation (9) est un système à logique floue.

16. Dispositif de sélection selon la revendication 14 ou 15,
**caractérisé en ce que** le dispositif d'exploitation (9) est un réseau neuronal.

17. Dispositif de sélection selon l'une quelconque des revendications précédentes,
**caractérisé en ce que** l'unité de signalisation (6, 12) comprend un dispositif de sortie vocale (15).

18. Dispositif de sélection selon l'une quelconque des revendications précédentes,
**caractérisé en ce que** l'élément d'actionnement (7, 12) comprend un dispositif d'entrée vocale (14).

19. Procédé pour sélectionner un rapport de marche ou un rapport de vitesse pour une boîte de vitesses d'un véhicule automobile,
**caractérisé par** les étapes suivantes :
a) détection (51, 52, 58 à 61) d'un état de fonctionnement du véhicule à décrire par au moins un paramètre indépendant de la vitesse de rotation ;
b) détermination d'un rapport de marche ou d'un rapport de vitesse à partir de l'état de fonctionnement détecté ;
c) signalisation (53, 57) du rapport de marche ou du rapport de vitesse ;
d) interrogation (54) d'un dispositif d'actionnement (7, 12) par l'actionnement duquel le rapport de marche ou le rapport de vitesse est activé, et
e) prédétermination (55) du rapport de marche ou du rapport de vitesse indépendamment de l'interrogation du dispositif d'actionnement (7, 12).

20. Procédé de sélection selon la revendication 19,
**caractérisé en ce que** la détection de l'état de fonctionnement comprend la détection (51) d'une position du véhicule.

21. Procédé de sélection selon la revendication 20,
**caractérisé en ce que** la détermination du rapport de marche ou du rapport de vitesse comprend .
a) l'interrogation (60, 61) d'une prédétermination de la destination ;
b) le calcul d'une direction de déplacement à partir de la position du véhicule et de la prédétermination de la destination.

22. Procédé de sélection selon l'une quelconque des revendications 19 à 21,
**caractérisé en ce que** le dispositif d'actionnement comprend la pédale d'accélérateur du véhicule.
